# FASCICULE DE BREVET EUROPEEN

(11) **EP 3 027 471 B1**
(45) Date de publication et mention de la délivrance du brevet: **31.05.2017**
(21) Numéro de dépôt: 14747070.2
(22) Date de dépôt: 30.06.2014
(51) Int. Cl.: B60R 13/04, B62D 25/18, F16B 5/12, F16B 5/06, F16B 21/08

(54) **ENJOLIVEUR POUR AILES DE VEHICULES AUTOMOBILES MUNI D'UN DISPOSITIF DE FIXATION**
ZIERLEISTE FÜR FAHRZEUGKOTFLÜGEL MIT EINER BEFESTIGUNGSVORRICHTUNG
TRIM ELEMENT FOR MOTOR VEHICLE FENDERS WITH A FIXATION DEVICE

(30) Priorité: 01.08.2013 FR 1357655
(43) Date de publication de la demande: 08.06.2016
(73) Titulaire: Renault S.A.S., 92100 Boulogne-Billancourt (FR)
(72) Inventeur: HENRY, Nicolas, F-78310 Maurepas (FR); VIVIER, Pierre, F-75014 Paris (FR)
(86) Numéro de dépôt international: PCT/FR2014/051667
(87) Numéro de publication internationale: WO 2015/015076

(56) Documents cités:
- DE-U1-202009 000 971
- FR-A1- 2 898 161
- FR-A1- 2 931 407
- FR-A1- 2 971 566
- FR-A1- 2 977 558
- FR-A1- 2 985 965

## Description

L'invention concerne le domaine d'éléments d'habillage externes pour ailes de roue de véhicules automobiles.

Des éléments d'habillage externes ou enjoliveurs d'ailes sont habituellement des éléments de garniture, par exemple en matériau polymère, entourant les zones extrémités des ailes adjacentes aux roues. Autrement dit, ce sont des éléments de forme globalement en arc de cercle, par exemple de type jupe, qui épousent le contour des ailes et dont le but est de répondre à des exigences esthétiques.

Cet enjoliveur est fixé sur les parties d'ailes par encliquetage et/ou collage.

L'enjoliveur d'ailes est habituellement positionné sur un bord de cet aile depuis l'extérieur du véhicule de sorte que cet enjoliveur est plaqué sur ce bord de l'aile habituellement selon un axe Y du véhicule, défini comme état un axe perpendiculaire à un axe longitudinal X du véhicule. Il est habituellement recherché que la surface externe de l'enjoliveur prolongeant celle de l'aile soit sans discontinuités, pour des raisons esthétiques.

La fixation de l'enjoliveur d'ailes sur l'aile est habituellement réalisée par un dispositif de fixation, lequel associe un support et un élément de fixation, par exemple un pion d'encliquetage ou agrafe, monté sur la surface interne du support. Un orifice traversant est effectué sur l'aile de sorte que l'enjoliveur d'aile est fixé et maintenu sur l'aile par simple pression engendrant le positionnement de l'élément de fixation vers l'intérieur du véhicule, au voisinage du passage de roue.

La demande de brevet FR 2 977 558 A1, qui montre le préambule de la revendication 1, décrit un ensemble aile, enjoliveur d'aile et un pare-choc, dans lequel, entre autres, l'enjoliveur d'aile est fixé sur l'aile grâce à des pions d'encliquetage. Les documents FR 2 985 965 et FR 2 971 566 décrivent une aile de roue présentant une bordure comportant une paroi externe opposée à une paroi interne et un enjoliveur d'aile présentant un bord libre avec une languette rabattable montée sur ledit bord libre et au moins un dispositif de fixation pour monter ledit enjoliveur de roue contre la paroi externe de ladite bordure. Il y a un besoin de mettre en oeuvre un dispositif de fixation de l'enjoliveur d'aile sur une aile de roue qui permette un positionnement adéquat de l'un par rapport à l'autre, simple à mettre en oeuvre permettant en outre une solidarisation ou fixation accrue.

L'invention vise à atteindre cet objectif en proposant une aile de roue présentant une bordure comportant une paroi externe opposée à une paroi interne et un enjoliveur d'aile présentant un bord libre et au moins un dispositif de fixation pour pouvoir monter en applique ledit enjoliveur de roue contre la paroi externe de ladite bordure, tandis que ledit dispositif de fixation s'étend en travers de la dite bordure, caractérisé en ce que ledit enjoliveur comprend en outre au moins une languette rabattable montée sur ledit bord libre pour pouvoir être rabattue contre ladite paroi interne et pour pouvoir coopérer avec ledit dispositif de fixation.

Ainsi, l'invention offre les avantages suivants.

La présence de l'au moins une languette rabattable qui coopère avec l'au moins un dispositif de fixation permet d'améliorer la fixation ou la solidarisation de l'enjoliveur d'aile à l'aile de roue, en assurant ainsi un maintien accru de l'un par rapport à l'autre, étant donné que la paroi interne de l'aile de roue est en quelque sorte prise en « sandwich » ou en étau entre l'enjoliveur de roue et le dispositif de fixation.

Le montage et la fixation de l'enjoliveur à l'aile sont également facilités et simplifiés grâce notamment à la précision de coopération qui peut avantageusement résulter entre ces deux éléments de solidarisation.

La présence d'une languette, qui peut être, selon des formes avantageuses de réalisation, un élément de fixation additionnel, permet en outre de réduire, voire de supprimer, l'espace vide entre la paroi externe de l'aile de roue et de l'enjoliveur selon par exemple l'axe Y du véhicule. En effet, le dispositif de fixation s'étend radialement en travers de l'aile de roue, vers le passage de roue, et la languette vient coopérer avec le dispositif de fixation situé dans un espace interne délimité par la paroi interne de l'aile de roue et le passage de roue. Ceci a un impact sur le plan des exigences de style du véhicule. Par ailleurs, l'absence d'espace vide enjoliveur d'aile-aile de roue autorise d'utiliser un enjoliveur d'ailes sur tout type d'ailes « classiques » de véhicules, par exemple des ailes dites « de série », sans recourir à la fabrication d'une aile spécifique par type ou modèle de véhicule qui puisse s'adapter à un dispositif de fixation placé dans ledit espace vide.

Dans le cadre de l'invention, le bord libre de l'enjoliveur d'aile peut avantageusement être situé dans une partie inférieure de l'enjoliveur dans le prolongement de la bordure d'aile.

Le bord libre de l'enjoliveur peut être agencé pour entourer une extrémité inférieure de la bordure d'aile.

Avantageusement, le dispositif de fixation, formant également par exemple un dispositif de réception de ladite languette, peut être agencé pour être engagé et retenu dans un évidement présent sur la bordure de l'aile.

Le dispositif de fixation peut donc être agencé pour présenter une forme complémentaire à l'évidement, de préférence traversant, et être retenu par exemple par frottement par des parois du dispositif de fixation. Un tel dispositif de fixation peut avantageusement être configuré pour former un dispositif de réception ou de support de la languette. Le dispositif de fixation et l'évidement sont donc avantageusement en regard l'un de l'autre.

Le dispositif de fixation peut être de forme carrée, rectangulaire, cylindrique ou autre, creux ou plein, faisant saillie, pourvu qu'il s'étende de manière radiale au travers de la bordure de l'aile de roue, vers le passage de roue. Le dispositif de fixation peut présenter une paroi dite avant, en direction du passage de roue, et une paroi dite arrière opposée, et des parois de contact avec les bords de l'évidement. Par exemple, des parois de contact supérieure et inférieure peuvent comprendre des nervures facilitant la disposition du dispositif de fixation en travers de la bordure de l'aile.

D'une manière générale, le dispositif de fixation peut être de la même matière que l'enjoliveur d'ailes, pour des raisons pratiques. Lorsque l'enjoliveur d'ailes est en un matériau polymère alors le dispositif de fixation peut également être en un matériau de même nature ou identique.

Le dispositif de fixation peut être solidarisé par une paroi arrière sur au moins une portion de surface interne de l'enjoliveur.

Le dispositif de fixation peut être une pièce rapportée solidarisée, par la paroi arrière, par exemple selon l'axe Y, à une partie de ladite surface interne par collage à chaud, si un matériau polymère est mis en oeuvre, ou bien par soudage ou autre, lorsque l'enjoliveur et le dispositif de fixation sont en matériau dit métallique, selon une acception large du terme.

En variante, le dispositif de fixation peut être d'un seul tenant avec l'enjoliveur d'ailes.

La paroi avant du dispositif de fixation peut avantageusement définir un orifice destiné à recevoir un élément de solidarisation conformé pour maintenir la languette rabattable sur ledit dispositif de fixation.

L'élément de solidarisation n'est nullement limité, et peut être un pion d'encliquetage, une agrafe, un rivet ou autre.

La présence de l'orifice, de préférence sur au moins une partie de la paroi avant, permet le passage de l'élément de solidarisation sur au moins une partie de sa longueur, lequel peut coopérer avec la languette, ce qui aboutit à un maintien de la languette sur ledit dispositif de fixation.

L'élément de solidarisation peut être placé dans un volume interne du dispositif de fixation, selon un agencement permettant la coopération avec la languette. L'élément de solidarisation peut être maintenu inamovible par solidarisation avec par exemple la paroi arrière du dispositif de fixation.

En variante, un élément de solidarisation conformé pour maintenir la languette rabattable sur ledit dispositif de fixation peut être fixé sur la paroi avant du dispositif de fixation.

Selon cette variante, la languette coopère avec le dispositif de fixation par l'intermédiaire de cet élément de solidarisation, notamment par un orifice réalisé sur la languette.

Selon des formes préférées de réalisation, la languette rabattable peut être munie dudit élément de solidarisation apte à coopérer avec le dispositif de fixation.

Dans ce cas, la paroi avant du dispositif de fixation est munie d'un orifice agencé pour recevoir ledit élément de solidarisation.

Avantageusement, la languette rabattable présente une première extrémité laquelle peut être montée sur ledit bord libre par un élément charnière.

La présence d'un tel élément charnière, comportant un axe de pivotement de la languette, permet de rabattre la languette afin qu'elle coopère avec le dispositif de fixation. Puisque la languette est fixée sur le bord libre, celle-ci est rabattue vers l'intérieur de l'espace vide entre l'aile de roue et la roue par pivotement, en effectuant un mouvement circulaire sur 130°-180°.

Avantageusement, la languette rabattable présente une deuxième extrémité susceptible de présenter une forme complémentaire au dispositif de fixation.

La languette peut donc présenter une deuxième extrémité laquelle peut être conçue pour avoir une forme complémentaire à celle du dispositif de fixation, de sorte que cette forme complémentaire vienne s'emboîter sur le dispositif de fixation, par coopération de forme, par exemple de type mâle-femelle. Dans ce cas, la forme de la deuxième extrémité de la languette est légèrement supérieure à celle du dispositif de fixation. La languette présente donc des parois dont les surfaces peuvent être agencées pour coopérer avec celles des parois de contact du dispositif de fixation.

Selon des formes de réalisation, la deuxième extrémité peut en outre comporter un orifice destiné à coopérer avec un élément de solidarisation présent sur le dispositif de fixation.

En variante, la deuxième extrémité de la languette peut être pourvue dudit élément de solidarisation destiné à coopérer avec la paroi avant du dispositif de fixation, laquelle définit un orifice pour le positionnement de l'élément de solidarisation en travers dudit orifice.

Entre la première et la deuxième extrémités, la languette rabattable peut présenter une bras agencé pour coopérer avec la paroi interne de la bordure de l'aile de roue.

Les deux extrémités respectives de la languette peut être reliées par un bras conformé de sorte que lorsque la languette est rabattue, le bras peut venir se plaquer contrer une partie ou la totalité de la paroi interne de la bordure, et prendre en étau la bordure de l'aile de roue.

La languette peut présenter des excroissances radiales ou saillies typiquement de quelques millimètres lesquelles peuvent être destinées à moduler ou pas l'effort de coopération entre la languette et le dispositif de fixation par l'intermédiaire de l'élément de fixation.

Il peut être prévu des joints d'étanchéité et/ou des éléments adhésifs, tels que colle ou bande adhésive, entre la paroi externe de l'aile de roue et l'enjoliveur de roue, pour renforcer le maintien et l'étanchéité.

L'enjoliveur de roue peut être pourvu d'une pluralité de dispositifs de fixation et de languettes pour assurer le maintien efficace. Par conséquent, la bordure de l'aile de roue peut également définir un nombre identiques d'évidements.

Selon des formes de réalisation avantageuses, lorsque l'enjoliveur de roue, le dispositif de fixation et la languette sont en un matériau polymère, l'ensemble de ces trois pièces peut être réalisé d'un seul tenant, c'est-à-dire qu'un même moule peut être utilisé pour leur fabrication. Ceci représente un avantage de mise en oeuvre à l'échelle industrielle notamment en termes de coût, puisqu'on fabrique les pièces en même temps, et, en outre, le positionnement mutuel de la languette et du dispositif de fixation peut être rendu plus précis. Ce positionnement précis peut également être réalisé par la présence de nervures sur par exemple la paroi interne de l'aile et sur la languette.

L'invention concerne également un procédé de montage en applique d'un enjoliveur d'aile présentant un bord libre sur une bordure d'aile de roue comportant une paroi externe opposée à une paroi interne, comprenant les étapes suivantes consistant à :
a) Se munir de l'enjoliveur d'aile pourvu d'au moins un dispositif de fixation et d'au moins une languette rabattable, tels que définis précédemment ;
b) Placer l'enjoliveur d'aile en applique contre la paroi externe de ladite bordure, tandis que ledit dispositif de fixation s'étend en travers de la dite bordure,
c) Rabattre la languette rabattable montée sur ledit bord libre contre ladite paroi interne et
d) Faire coopérer ladite languette rabattable avec ledit dispositif de fixation.

L'invention concerne également un véhicule automobile comportant une aile de roue, telle que définie précédemment.

L'invention est maintenant décrite en référence aux dessins annexés, non limitatifs, dans lesquels :
- la figure 1A est une vue partielle en coupe d'une aile de roue comportant un enjoliveur de roue muni d'un dispositif de fixation et d'une languette, et 1B lorsque la languette est en position de coopération avec le dispositif de fixation, selon un exemple de mode de réalisation ;
- la figure 2 est une vue partielle en perspective d'un enjoliveur de roue, selon un exemple de réalisation, et
- la figure 3 est une vue partielle en coupe et en perspective d'une aile de roue comportant un enjoliveur de roue muni d'un dispositif de fixation et d'une languette, selon un exemple de réalisation.

Dans les figures qui suivent l'axe X est une direction longitudinale définie dans le sens de déplacement du véhicule, l'axe Y est une direction perpendiculaire à l'axe X, et l'axe Z est défini selon un axe vertical. Par « sensiblement » on entend que les axes peuvent s'écarter de l'horizontalité ou de la verticalité d'environ ± 20°.

Les mêmes références de chaque figure indiquent des éléments identiques ou similaires.

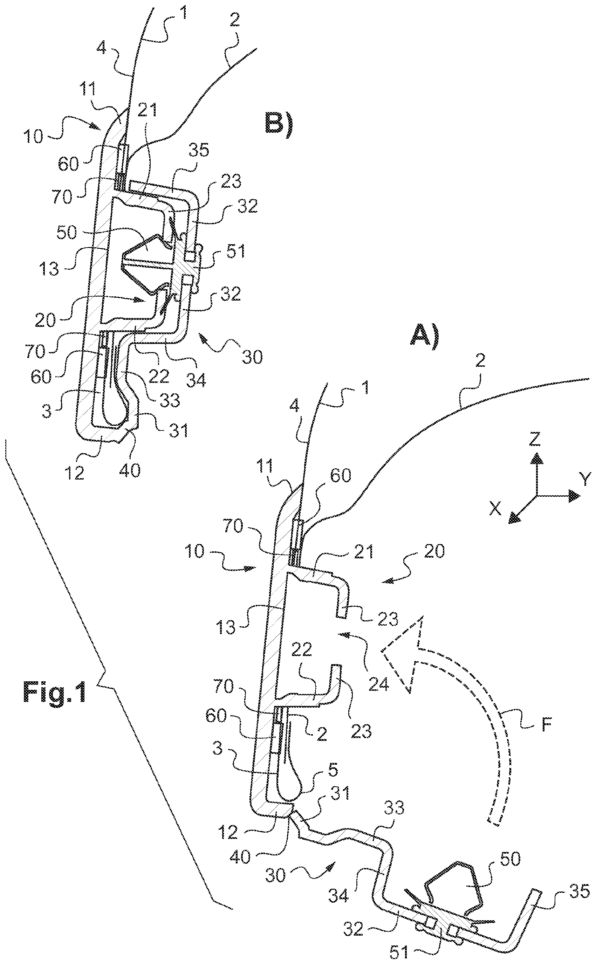

La figure 1A montre une vue en coupe partielle d'une aile de roue 1 et un emboutis tôlerie 2 sur un passage de roue (la roue n'étant pas représentée). La bordure de l'aile de roue présente une paroi interne 3 et une paroi externe 4. Sur cette figure 1 les parois internes et externes ne sont pas distinguables du fait de la faible épaisseur de la tôle de l'aile de roue.

L'aile de roue 1 s'étend sensiblement selon l'axe Z, et l'extrémité inférieure 5 de la partie inférieure de l'aile de roue 1, au niveau du bord libre de l'enjoliveur d'aile 10, forme un coude afin que cette extrémité inférieure s'étende partiellement selon l'axe Z dans le sens inverse.

L'enjoliveur de roue 10 s'étend sur une bordure de l'aile de roue 1, sensiblement selon l'axe Z du véhicule, et l'extrémité dite supérieure 11 de l'enjoliveur 10 est agencée pour être en contact par la surface interne 13 de l'enjoliveur avec la paroi externe 4 de la partie supérieure de la bordure d'aile 10. L'extrémité dite inférieure de l'enjoliveur 10, également plaquée contre la paroi externe 4 de l'aile, présente un bord libre 12 lequel s'étend jusqu'à l'extrémité inférieure 5 de l'aile 1 et se prolonge en partie sensiblement selon l'axe Y, de façon à entourer ladite extrémité inférieure 5 de l'aile 1. Il est prévu dans les zones de contact une bande adhésive 60 et un joint d'étanchéité 70.

L'enjoliveur de roue 10 comprend un dispositif de fixation 20. Le dispositif de fixation 20 et l'enjoliveur 10 sont en matière plastique et fabriqués dans un seul moule, c'est-à-dire que la paroi arrière du dispositif de fixation 20 est confondue avec une portion de la surface interne 13 de l'enjoliveur 10.

Le dispositif de fixation 20 s'étend en travers de la bordure de l'aile de roue 1 grâce à un orifice ou évidement traversant. Plus précisément, le dispositif de fixation comporte deux parois 21,22 en regard l'une de l'autre, selon sensiblement l'axe Z, qui sont en contact avec les bords de l'orifice, permettant le maintien de l'enjoliveur 20 par frottement, la paroi interne 13 de l'enjoliveur se positionne également en butée. La paroi avant 23 sensiblement parallèle à la disposition de l'enjoliveur 10 définit un orifice traversant 24. Le dispositif de fixation 20 définit un volume intérieur délimité par les parois 21,22 et 23. Les parois supérieure et inférieure n'ont pas été représentées.

Sur le bord libre 12 de l'enjoliveur 10 est articulée une languette 30 par l'intermédiaire d'un film charnière 40 au niveau de la première extrémité 31 de la languette 30.

La languette 30 présente un bras 33, entre la première extrémité 31 et la deuxième extrémité 32, conformé pour épouser le contour de la partie inférieure de l'aile 1. Ici, le bras présente des brisures ou zigzags. La deuxième extrémité 32 est conformée pour présenter une forme complémentaire au dispositif de fixation 20 de façon à pourvoir coopérer l'un avec l'autre, par exemple par emboîtement.

La deuxième extrémité 32 de la languette 30 présente un orifice traversant agencé pour recevoir et maintenir un élément de solidarisation 50, ici un pion d'encliquetage, conformé pour maintenir la languette 30 sur le dispositif de fixation 20. Le pion d'encliquetage 50 est monté sur un support 51. La deuxième extrémité 32 est ici agencée pour présenter deux parois 34,35 dont les surfaces sont destinées à coopérer respectivement avec les surfaces des parois de contact 22 et 21 du dispositif de fixation 20. Les parois dites supérieure et inférieure ne sont pas représentées.

La flèche F montre le mouvement de la languette rabattable qui vient coopérer avec le dispositif de fixation 20.

La figure 1B montre la languette 30 rabattue contre la portion de paroi interne 3 de l'aile de roue 1 par le bras 33. Selon ce mode de réalisation, on supposera que le bras 33 vient épouser la forme de la paroi interne 3. Le bras 33 maintien en étau la partie inférieure de la bordure d'aile 1.

La languette 30 coopère également avec le dispositif de fixation 20 par l'intermédiaire de la deuxième extrémité 32. Les parois 34,35 recouvrent respectivement les parois 22,21. Le pion d'encliquetage 50 est disposé dans le volume intérieur du dispositif 20, délimité par les parois 21,22, 23, par l'intermédiaire de l'orifice 24. Un espace délimité entre la paroi avant 23 et la deuxième extrémité 32 permet de placer le support 51 du pion d'encliquetage 50. Ce dernier présente une forme classique de type conique qui permet l'engagement de ce pion 50 et le maintien de la languette 30 et du dispositif de fixation 20.

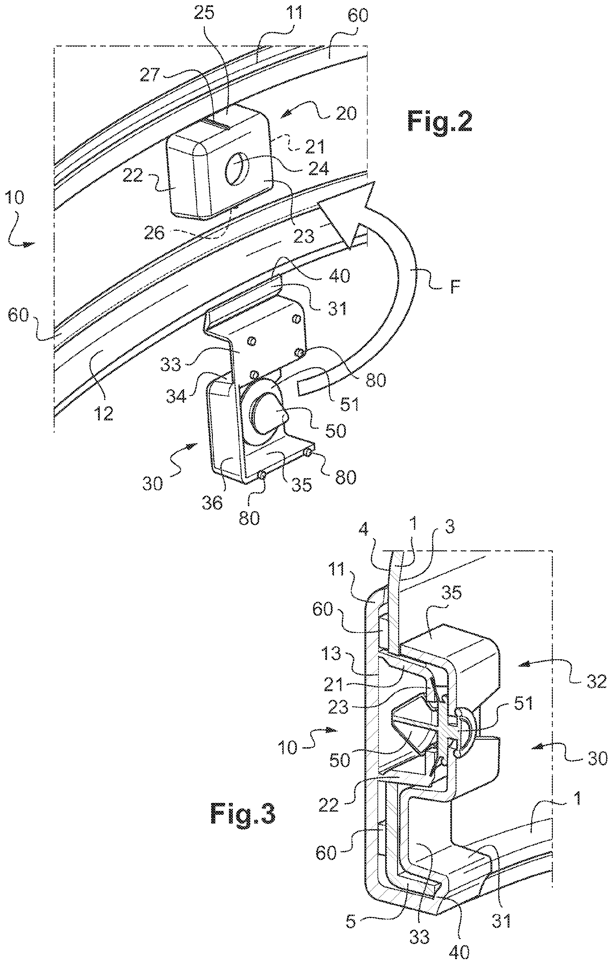

La figure 2 représente une vue partielle en perspective d'un enjoliveur de roue 10 comportant un dispositif de fixation 20 et une languette rabattable 30.

Ce mode de réalisation, l'enjoliveur 10 comporte une extrémité supérieure 11 et inférieure 12. Une bande adhésive 60 s'étend de part en part de l'enjoliveur dans le sens de la longueur.

L'enjoliveur 10 comporte un dispositif de fixation 20 de forme carrée présentant outre les parois 21,22,23, des parois de contact supérieure 25 et inférieure 26 (non visible). Les parois de contact 25,26 sont pourvues de nervures 27 pour faciliter le guidage du dispositif de fixation selon l'axe Z. Un orifice circulaire 24 est effectué sur la paroi 23.

La languette rabattable 30 est fixée par l'intermédiaire du film charnière 40 à l'extrémité inférieure de l'enjoliveur 12 qui s'étend sensiblement selon l'axe Y. Un bras 33 est articulé au film charnière 40 par une première extrémité 31. La deuxième extrémité 32 présente deux parois 34,35 et une paroi latérale 36. Le pion d'encliquetage 50 est monté sur un support 51 et est fixé dans un orifice dans cette deuxième extrémité 32. La première extrémité 31 comporte ici des tétons 80 qui permettent de moduler l'effort d'encliquetage du pion d'encliquetage 50 dans l'orifice 24, en fonction du jeu mutuel des éléments et de leur agencement.

La flèche F montre le mouvement de 180° effectué par la languette 30 pour venir coopérer avec le dispositif de fixation 20.

La figure 3 est une vue partielle en coupe et en perspective d'une aile de roue comportant un enjoliveur de roue muni d'un dispositif de fixation et d'une languette, selon un exemple de réalisation. La languette 30 est rabattue contre la portion de paroi interne 3 de l'aile de roue 1 par le bras 33. La paroi externe 4 de l'aile 1 est plaquée contre la paroi interne 13 de l'enjoliveur. Le bras 33 maintien en étau la partie inférieure de la bordure d'aile 1 contre l'enjoliveur 10.

La languette 30 coopère également avec le dispositif de fixation 20 par l'intermédiaire de la deuxième extrémité 32. Les parois 34,35 recouvrent les parois 22,21. Le pion d'encliquetage 50 est disposé dans le volume intérieur du dispositif 20, délimité par les parois 21,22, 23, par l'intermédiaire de l'orifice 24. Un espace délimité entre la paroi avant 23 et la deuxième extrémité 32 permet de placer le support 51 du pion d'encliquetage 50. Le support 51 vient en butée contre la paroi de contact 23. Le pion présente également ici une forme classique de type conique qui permet l'engagement de ce pion 50 et le maintien de la languette 30 et du dispositif de fixation 20.

## Revendications

1. Aile de roue (1) présentant une bordure comportant une paroi externe (4) opposée à une paroi interne (3) et un enjoliveur d'aile (10) présentant un bord libre (12) et au moins un dispositif de fixation (20) pour pouvoir monter en applique ledit enjoliveur (10) de roue contre la paroi externe (4) de ladite bordure, tandis que ledit dispositif de fixation (20) s'étend en travers de la dite bordure, **caractérisé en ce que** ledit enjoliveur (10) comprend en outre au moins une languette rabattable (30) montée sur ledit bord libre (12) pour pouvoir être rabattue contre ladite paroi interne (3) et de façon à coopérer avec ledit dispositif de fixation (20).

2. Aile de roue selon la revendication 1, dans laquelle le dispositif de fixation (20) est agencé pour être engagé et retenu dans un évidement présent sur la bordure de l'aile.

3. Aile de roue selon la revendication 1 ou 2, dans laquelle le dispositif de fixation (20) est solidarisé par une paroi arrière sur au moins une portion de surface interne (13) de l'enjoliveur (10).

4. Aile de roue selon l'une des revendications 1 à 3, dans laquelle le dispositif de fixation (20) présente une paroi avant (23) définissant un orifice (24) destiné à recevoir un élément de solidarisation (50,51) conformé pour maintenir la languette rabattable (30) sur ledit dispositif de fixation (20).

5. Aile de roue selon l'une des revendications 1 à 3, dans laquelle le dispositif de fixation (20) présente une paroi avant (23) sur laquelle est fixé un élément de solidarisation (50,51) conformé pour maintenir la languette rabattable (30) sur ledit dispositif de fixation (20).

6. Aile de roue selon l'une des revendications 1 à 3, dans laquelle la languette rabattable (30) est munie d'un élément de solidarisation (50,51) conformé pour maintenir ladite languette rabattable (30) sur ledit dispositif de fixation (20).

7. Aile de roue selon l'une des revendications 1 à 6, dans laquelle la languette rabattable (30) présente une première extrémité (31) montée sur ledit bord libre (12) par un élément charnière (40).

8. Aile de roue selon l'une des revendications 1 à 7, dans laquelle la languette rabattable (30) présente une deuxième extrémité (32) présentant une forme complémentaire au dispositif de fixation (20).

9. Aile de roue selon l'une des revendications 1 à 8, dans laquelle, entre la première et la deuxième extrémités (31,32), la languette rabattable (30) présente un bras (33) agencé pour coopérer avec la paroi interne (3) de la bordure de l'aile de roue.

10. Véhicule automobile comportant une aile de roue (1), telle que définie selon l'une de revendications précédentes.

## Patentansprüche

1. Radkotflügel (1), der einen Rand aufweist, der eine Außenwand (4) gegenüber einer Innenwand (3) und eine Kotflügelzierleiste (10) umfasst, die einen freien Rand (12) und mindestens eine Befestigungsvorrichtung (20) aufweist, um die Radzierleiste (10) an der Außenwand (4) des Rands anliegend befestigen zu können, während sich die Befestigungsvorrichtung (20) durch den Rand hindurch erstreckt, **dadurch gekennzeichnet, dass** die Zierleiste (10) ferner mindestens eine zusammenklappbare Nase (30) umfasst, die dahingehend an dem freien Rand (12) befestigt ist, gegen die Innenwand (3) und zum Zusammenwirken mit der Befestigungsvorrichtung (20) zusammengeklappt zu werden.

2. Radkotflügel nach Anspruch 1, wobei die Befestigungsvorrichtung (20) dahingehend angeordnet ist, in einer Aussparung, die in dem Kotflügelrand vorliegt, aufgenommen und gehalten zu werden.

3. Radkotflügel nach Anspruch 1 oder 2, wobei die Befestigungsvorrichtung (20) durch eine hintere Wand mit mindestens einem Abschnitt der Innenfläche (13) der Zierleiste (10) fest verbunden ist.

4. Radkotflügel nach einem der Ansprüche 1-3, wobei die Befestigungsvorrichtung (20) eine vordere Wand (23) aufweist, die eine Öffnung (24) definiert, die zur Aufnahme eines Befestigungselements (50, 51) vorgesehen ist, das zum Halten der zusammenklappbaren Nase (30) an der Befestigungsvorrichtung (20) geformt ist.

5. Radkotflügel nach einem der Ansprüche 1-3, wobei die Befestigungsvorrichtung (20) eine vordere Wand (23) aufweist, an der ein Befestigungselement (50, 51) fixiert ist, das zum Halten der zusammenklappbaren Nase (30) an der Befestigungsvorrichtung (20) geformt ist.

6. Radkotflügel nach einem der Ansprüche 1-3, wobei die zusammenklappbare Nase (30) mit einem Befestigungselement (50, 51) versehen ist, das zum Halten der zusammenklappbaren Nase (30) an der Befestigungsvorrichtung (20) geformt ist.

7. Radkotflügel nach einem der Ansprüche 1-6, wobei die zusammenklappbare Nase (30) ein erstes Ende (31) aufweist, das durch ein Scharnierelement (40) an dem freien Rand (12) befestigt ist.

8. Radkotflügel nach einem der Ansprüche 1-7, wobei die zusammenklappbare Nase (30) ein zweites Ende (32) aufweist, das eine zur Befestigungsvorrichtung (20) komplementäre Form aufweist.

9. Radkotflügel nach einem der Ansprüche 1-8, wobei die zusammenklappbare Nase (30) zwischen dem ersten und dem zweiten Ende (31, 32) einen Arm (33) aufweist, der dahingehend angeordnet ist, mit der Innenwand (3) des Rands des Radkotflügels zusammenzuwirken.

10. Kraftfahrzeug, das einen Radkotflügel (1) nach einem der vorhergehenden Ansprüche umfasst.

## Claims

1. Wheel fender (1) which has an edge which comprises an external wall (4) which is opposite an internal wall (3) and a fender trim molding (10) which has a free edge (12) and at least one fixing device (20) in order to be able to press-mount the wheel trim molding (10) against the external wall (4) of the edge whilst the fixing device (20) extends through the edge, **characterized in that** the trim molding (10) further comprises at least one foldable tongue (30) which is mounted on the free edge (12) in order to be able to be folded against the internal wall (3) and so as to cooperate with the fixing device (20).

2. Wheel fender according to Claim 1, wherein the fixing device (20) is arranged so as to be engaged and retained in a recess which is present on the edge of the fender.

3. Wheel fender according to Claim 1 or claim 2, wherein the fixing device (20) is fixedly joined via a rear wall to at least a portion of the internal surface (13) of the trim molding (10).

4. Wheel fender according to one of Claims 1 to 3, wherein the fixing device (20) has a front wall (23) which defines a hole (24) which is intended to receive a joining element (50, 51) which is shaped to retain the foldable tongue (30) on the fixing device (20).

5. Wheel fender according to one of Claims 1 to 3, wherein the fixing device (20) has a front wall (23) to which there is fixed a joining element (50, 51) which is shaped to retain the foldable tongue (30) on the fixing device (20).

6. Wheel fender according to one of Claims 1 to 3, wherein the foldable tongue (30) is provided with a joining element (50, 51) which is shaped to retain the foldable tongue (30) on the fixing device (20).

7. Wheel fender according to one of Claims 1 to 6, wherein the foldable tongue (30) has a first end (31) which is mounted on the free edge (12) via a hinge element (40).

8. Wheel fender according to one of Claims 1 to 7, wherein the foldable tongue (30) has a second end (32) which has a shape which complements the fixing device (20).

9. Wheel fender according to one of Claims 1 to 8, wherein between the first and second ends (31, 32), the foldable tongue (30) has an arm (33) which is arranged so as to cooperate with the internal wall (3) of the edge of the wheel fender.

10. Motor vehicle comprising a wheel fender (1), such as defined according to one of the preceding claims.
